# DEMANDE DE BREVET EUROPEEN

(11) **EP 4 764 250 A1**
(43) Date de publication de la demande: **24.06.2026**
(21) Numéro de dépôt: 25225163.2
(22) Date de dépôt: 18.12.2025
(51) Int. Cl.: F16F 15/00

(54) **COQUE CYLINDRIQUE COMPRENANT UN SYSTÈME D'AMORTISSEMENT DE VIBRATIONS**

(30) Priorité: 19.12.2024 FR 2414595
(71) Demandeur: NAVAL Group, 75015 Paris (FR)
(72) Inventeur: LOSSOUARN, Boris, 75003 PARIS (FR)
(74) Mandataire: Lavoix

(57) **Abrégé**

La présente invention concerne une coque cylindrique comportant une paroi cylindrique et délimitant un espace interne, la coque étant susceptible de se déformer radialement sous l'effet de vibrations,

La coque comprend un système d'amortissement de vibrations comportant au moins une paire de transducteurs piézoélectriques (22) branchés en parallèle et disposés sur la paroi de la coque de façon symétrique, chaque transducteur piézoélectrique (22) étant connecté à un circuit dissipatif (24) respectif comportant au moins une résistance (26) et une inductance (28),

Le système (20) d'amortissement comprend en outre, pour chaque paire de transducteurs piézoélectriques (22), un circuit (32) additionnel de résonance branché en parallèle avec ladite paire de transducteurs piézoélectriques (22) et comprenant au moins une résistance (36) et une inductance (38).

## Description

La présente invention concerne une coque cylindrique comportant une paroi cylindrique s'étendant autour d'un axe central et délimitant un espace interne, la coque étant susceptible de se déformer radialement sous l'effet de vibrations, la coque comprenant un système d'amortissement de vibrations comportant au moins une paire de transducteurs piézoélectriques branchés en parallèle et disposés sur la paroi de la coque de façon symétrique par rapport à l'axe central, chaque transducteur piézoélectrique étant connecté à un circuit dissipatif respectif comportant au moins une résistance et une inductance.

Une telle coque présente une symétrie cyclique et est par exemple un stator d'une turbomachine, un réservoir, une conduite ou une carlingue.

Une telle coque est par exemple utilisée dans les motorisations terrestres, navales, aéronautiques et spatiales

Il est connu qu'une telle coque peut être soumise à des efforts ou vibrations radiales, susceptibles de provoquer des déformations de la coque. De telles vibrations sont par exemple dues à des variations de pression brusques dans l'espace interne de la coque, par exemple du fait de l'entrainement d'un rotor.

Lorsque la coque entre en résonnance sur un mode de déformation particulier, des niveaux vibratoires élevés se développent. La forme cylindrique de la coque se déforme alors selon une allure spatiale particulière : on observe ainsi une dilatation (couramment appelé mode de respiration), ou des déformations de certains points de la coque (couramment appelés modes à diamètre). Les modes à diamètre sont définis par le nombre de points de déformation maximale, appelés ventres et répartis périodiquement à la circonférence de la coque. Un mode à diamètre d'ordre « n » fait ainsi apparaitre « 2n » ventres (« n » en positif et « n » en négatif) et « 2n » noeuds.

De telles déformations sont à éviter, car elles entrainent des niveaux de contraintes élevées sur la coque, susceptibles de réduire la durée de vie en fatigue de la coque. De plus, les vibrations sont susceptibles de générer du bruit à des niveaux importants.

Afin de réduire les vibrations, il a été proposé d'utiliser un système d'amortissement de ces vibrations.

En particulier, le document EP 2 860 405 prévoit, dans le cas d'un rotor, l'utilisation d'un système amortisseur de vibrations muni de transducteurs piézoélectriques répartis circulairement et qui sont branchés à des circuits électriques résonants dissipatifs.

Toutefois, une telle solution ne donne pas entière satisfaction. En effet, le positionnement des transducteurs piézoélectriques dépend du mode double à contrôler et doit donc être précis.

Le but de l'invention est alors de proposer une coque comportant un système d'amortissement qui soit simple d'installation, tout en garantissant un amortissement optimal des vibrations auxquelles est soumise la coque.

À cet effet, l'invention a pour objet une coque du type précité, caractérisée en ce que le système d'amortissement comprend en outre, pour chaque paire de transducteurs piézoélectriques, un circuit additionnel de résonance branché en parallèle avec ladite paire de transducteurs piézoélectriques et comprenant au moins une résistance et une inductance.

Le circuit additionnel de résonance permet d'amortir simultanément deux paires de modes à diamètre d'ordres pair et impair de manière simple. Le nombre et le positionnement des transducteurs piézoélectriques sont également moins contraints.

Suivant d'autres aspects avantageux de l'invention, la coque comprend une ou plusieurs des caractéristiques suivantes, prises isolément ou suivant toutes les combinaisons techniquement possibles :
- les transducteurs piézoélectriques sont répartis angulairement de manière homogène sur la paroi cylindrique de la coque ;
- le système d'amortissement comprend au moins six paires de transducteurs piézoélectriques, de préférence au moins huit paires de transducteurs piézoélectriques ;
- la polarité des branchements des transducteurs piézoélectriques de chaque paire est telle que les transducteurs piézoélectriques génèrent dans leur circuit dissipatif respectif une tension de même signe lorsqu'ils sont déformés dans le même sens ;
- la paroi cylindrique comprend une surface interne orientée vers l'axe central et une surface externe opposée, le système d'amortissement étant agencé sur la surface interne ou sur la surface externe de la paroi cylindrique ;
- chaque transducteur piézoélectrique forme avec le circuit dissipatif auquel il est connecté un circuit RLC résonant présentant une fréquence d'amortissement, ladite fréquence d'amortissement étant réglée de manière à être égale à une fréquence de résonnance de la coque ;
- la fréquence d'amortissement est réglée de manière à être égale à une fréquence de résonnance d'ordre pair de la coque ;
- le circuit additionnel de résonance présente une fréquence d'amortissement réglée de manière à être égale à une fréquence de résonnance d'ordre impair de la coque ;
- le circuit additionnel de résonance ne comprend pas de capacité additionnelle ;
- la paroi cylindrique est réalisée en métal ou en matériaux composites, de préférence en un composite à base de verre et de résine.

L'invention apparaîtra plus clairement à la lecture de la description qui va suivre, donnée uniquement à titre d'exemple non limitatif, et faite en référence aux dessins dans lesquels :
[Fig. 1] la figure 1 illustre de manière schématique une coque selon l'art antérieur déformée par des modes à diamètre d'ordre n=2 (à gauche) et n=3 (à droite) ;
[Fig. 2] la figure 2 est une vue schématique en coupe d'une coque selon l'invention, comprenant un système d'amortissement de vibrations comportant six paires de transducteurs piézoélectriques ;
[Fig. 3] la figure 3 représente un circuit électrique associé à une paire de transducteurs piézoélectriques de la figure 2 ;
[Fig. 4] la figure 4 représente le circuit électrique de la figure 3 sous forme simplifiée, dans le cas d'un mode à diamètre d'ordre pair (schéma A) et d'un mode à diamètre d'ordre impair (schéma B).

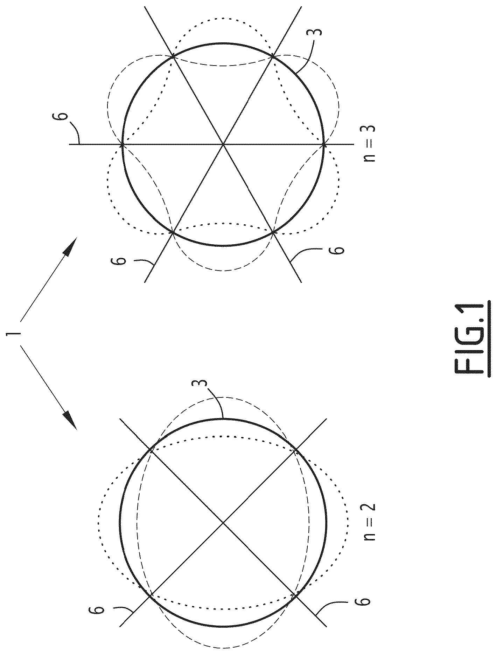

La figure 1 est un schéma en coupe représentant une coque cylindrique 1 selon l'art antérieur. La coque cylindrique 1 est représentée déformée (contours en pointillés) à cause d'un mode double à diamètre d'ordre 2 (figure de gauche) et à cause d'un mode double à diamètre d'ordre 3 (figure de droite). Le contour 3 de la coque cylindrique 1 non déformée est représenté en trait continu. Des nœuds de vibration, où la coque 1 ne subit aucune déformation, sont alignés sur des diamètres nodaux 6 répartis uniformément à 360°.

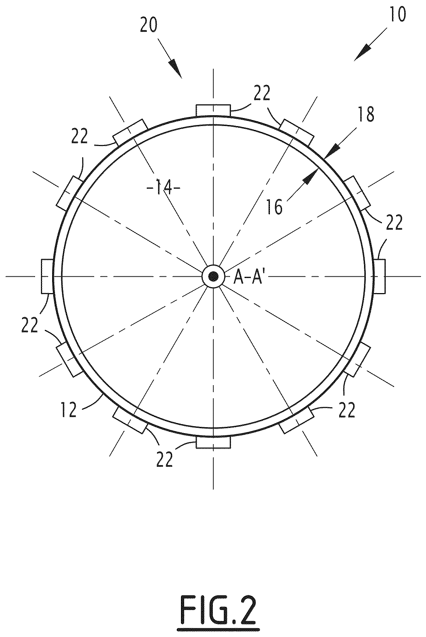

Une coque 10 cylindrique selon l'invention est représentée sur la figure 2.

La coque 10 est par exemple une conduite, un réservoir, un tube, une tuyère, une carlingue ou un stator.

La coque 10 comporte une paroi 12 cylindrique s'étendant selon un axe central A-A'. La paroi 12 cylindrique délimite radialement un espace interne 14.

La paroi 12 cylindrique est de préférence réalisée en métal, notamment en acier, ou en matériau composite, par exemple en un composite à base de verre et de résine, notamment à base de fibres de verre et de résine époxy.

La paroi 12 cylindrique comprend une surface interne 16, orientée vers l'axe central A-A', et une surface externe 18 opposée.

L'espace interne 14 est par exemple destiné à être parcouru par un fluide, tel qu'un gaz ou un liquide.

La coque 10 est susceptible de se déformer radialement, notamment du fait de vibrations.

Pour réduire l'amplitude de ces vibrations, la coque 10 selon l'invention comprend un système 20 d'amortissement de vibrations.

De préférence, le système 20 d'amortissement est agencé au moins en partie sur la paroi 12 de la coque 10. En variante, le système 20 d'amortissement est agencé sur une bague montée sur la coque.

Dans l'exemple de la figure 2, le système 20 d'amortissement est agencé sur la surface externe 18 de la paroi 12 de la coque 10. En variante, le système 20 d'amortissement est agencé sur la surface interne 16 de la paroi 12 de la coque 10. En variante, le système 20 d'amortissement est agencé dans une rainure ménagée sur la paroi 12. En variante, le système 20 d'amortissement est agencé dans des logements ménagés sur la paroi 12, permettant ainsi une continuité de surface sans relief ou aspérité.

Le système 20 d'amortissement comprend au moins une paire de transducteurs piézoélectriques 22, aussi appelés patchs piézoélectriques 22.

Dans l'exemple de la figure 2, six paires de transducteurs piézoélectriques 22 sont représentés.

Avantageusement, le système 20 d'amortissement comprend au moins 4n transducteurs piézoélectriques 22, n étant l'ordre maximal cible. Par exemple, pour amortir un mode à diamètre d'ordre 3, douze transducteurs piézoélectriques 22, c'est-à-dire six paires de transducteurs piézoélectriques 22, sont avantageusement prévus.

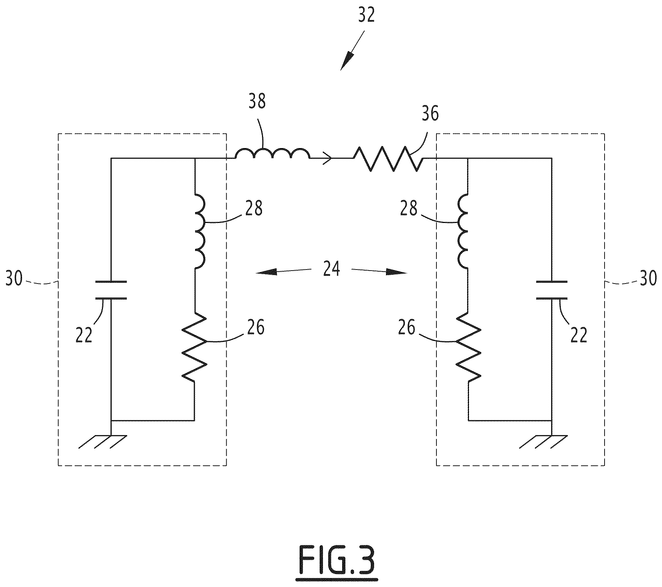

Les transducteurs piézoélectriques 22 d'une paire donnée sont branchés selon le dessin de la figure 3.

Les transducteurs piézoélectriques 22 d'une paire donnée sont disposés de façon symétrique par rapport à l'axe central A-A'. Autrement dit, ils sont disposés sur la paroi 12 de façon diamétralement opposées.

De préférence, l'ensemble des transducteurs piézoélectriques 22 sont répartis angulairement de manière homogène sur la paroi 12 cylindrique. Autrement dit, les transducteurs piézoélectriques 22 sont préférentiellement équi-répartis sur toute la circonférence de la paroi 12.

Chaque transducteur piézoélectrique 22 est un composant comprenant un matériau piézoélectrique propre à transformer une déformation mécanique en un courant électrique. Chaque transducteur piézoélectrique 22 est donc apte à convertir une énergie mécanique en une énergie électrique. Il est polarisé et délivre une charge dont le signe dépend du sens de sa déformation et de son orientation.

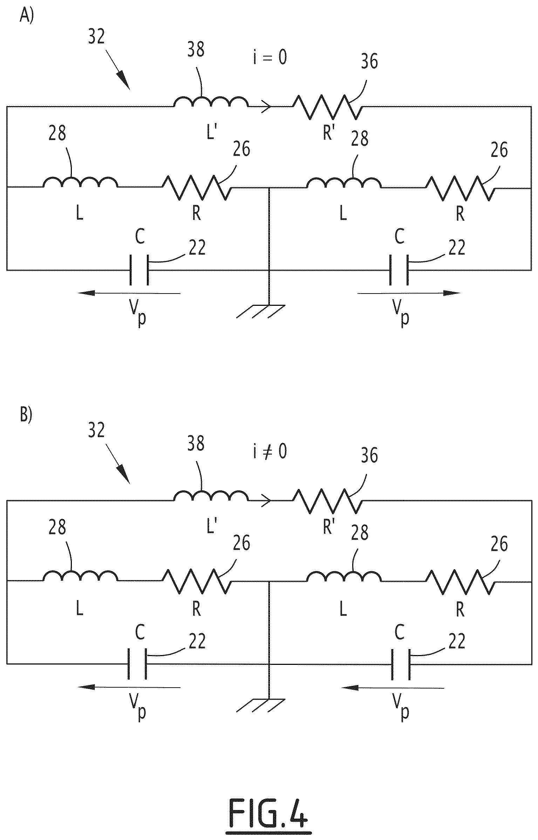

Chaque transducteur piézoélectrique 22 a un comportement capacitif et peut être modélisé électriquement comme un condensateur de capacité C, comme visible sur les figures 3 et 4.

Le système 20 d'amortissement comprend également des circuits dissipatifs 24. Dans un souci de clarté, lesdits circuits ne sont pas représentés sur la figure 2.

Chaque transducteur piézoélectrique 22 est connecté en série à un circuit dissipatif 24 respectif comportant au moins une résistance 26 et une inductance 28.

Chaque circuit dissipatif 24 respectif est configuré pour dissiper l'énergie électrique générée au niveau du transducteur piézoélectrique 22 associé.

La résistance 26 est propre à dissiper l'énergie électrique reçue sous forme de chaleur. La valeur R de la résistance 26 est avantageusement choisie pour permettre une dissipation maximale de l'énergie électrique.

L'inductance 28 permet d'avoir une résonance du circuit fermé, permettant d'acheminer l'énergie électrique dans le circuit. L'inductance 28 est par exemple une bobine d'inductance L.

Chaque circuit dissipatif 24 forme avec son transducteur piézoélectrique 22 associé un résonateur électrique 30. Ainsi, pour « p/2 » paires de transducteur piézoélectrique 22, le système 20 d'amortissement comprend « p » résonateurs électriques 30.

Ainsi, chaque transducteur piézoélectrique 22 forme avec le circuit dissipatif 24 auquel il est connecté un circuit RLC résonant présentant une fréquence d'amortissement ω_{A}. De manière connue, ladite fréquence d'amortissement ω_{A} est fonction de la capacité C du circuit et de son inductance L. Les valeurs de la capacité C et de l'inductance L sont avantageusement choisies de manière à ce que la fréquence d'amortissement soit égale à celle du mode à amortir.

Ladite fréquence d'amortissement ω_{A} est avantageusement réglée de manière à être égale à une fréquence de résonnance de la coque 10. La fréquence d'amortissement ω_{A} est réglée de manière à être égale à une fréquence de résonnance d'ordre pair de la coque 10.

Chaque résonateur électrique 30 est propre à générer une tension électrique Vp s'opposant à la déformation de la coque 10 par effet piézoélectrique indirect.

La polarité des branchements des transducteurs piézoélectriques 22 de chaque paire est telle que chacun desdits transducteurs génère dans le circuit dissipatif 24 associé un courant de même signe lorsqu'ils sont déformés dans le même sens.

Autrement dit, pour un mode à diamètre d'ordre pair (par exemple n=2), deux transducteurs 22 d'une même paire et situés de part et d'autre de l'axe central A-A' génèrent des tensions Vp identiques. Pour un mode à diamètre d'ordre impair (par exemple n=3), ces mêmes transducteurs génèrent des tensions Vp de même amplitude mais de signes opposés.

Le système 20 d'amortissement comprend en outre, pour chaque paire de transducteurs piézoélectriques 22, un circuit 32 additionnel de résonance branché en parallèle avec ladite paire de transducteurs piézoélectriques 22.

Dans un souci de clarté, ledit circuit 32 n'est pas représenté sur la figure 2.

Le circuit 32 additionnel de résonance est distinct des circuits dissipatifs 24. Le circuit 32 additionnel de résonance forme avec les circuits dissipatifs 24 auxquels il est branché un circuit indépendant.

Le circuit 32 additionnel de résonance comprend au moins une résistance 36 et une inductance 38. L'inductance 38 est par exemple une bobine d'inductance L'.

Le système 20 d'amortissement comprend ainsi trois résistances 26, 36 et trois inductances 28, 38 pour chaque paire de transducteurs piézoélectriques 22. Autrement dit, chaque circuit indépendant comprend trois résistances 26, 36 et trois inductances 28, 38.

La valeur R' de la résistance 36 est avantageusement choisie pour permettre une dissipation maximale de l'énergie électrique.

Avantageusement, le circuit 32 additionnel de résonance est dépourvu de capacité additionnelle.

Le circuit 32 additionnel de résonance forme également avec la paire de transducteurs piézoélectriques 22 associée un résonateur électrique. Ainsi, la paire de transducteurs piézoélectriques 22 forme avec le circuit 32 auquel elle est connectée un circuit R'L'C' résonant présentant une fréquence d'amortissement ω_{A}'. De manière connue, ladite fréquence d'amortissement ω_{A}' dépend notamment de la capacité C' du circuit et de son inductance L'. La valeur de l'inductance L' est avantageusement choisie de manière à ce que la fréquence d'amortissement soit égale à celle du mode à amortir.

La fréquence d'amortissement ω_{A}' est avantageusement réglée de manière à être égale à une fréquence de résonnance d'ordre impair de la coque 10.

Le circuit 32 additionnel de résonance est ainsi apte à réduire l'amplitude vibratoire d'un mode d'ordre impair, sans limiter l'amortissement vibratoire du mode d'ordre pair ciblée pour les résonateurs électriques 30.

En effet, pour deux transducteurs piézoélectriques 22 placés de façon symétrique par rapport à l'axe central A-A', puisqu'un mode à diamètre d'ordre pair génère des tensions piézoélectriques identiques du fait de la symétrie des déformées modales, l'ajout d'une ligne électrique entre ces deux transducteurs n'a pas d'influence. En effet, le courant y circulant est nul. Le circuit 32 additionnel de résonance n'a donc pas d'effet sur les résonateurs électriques 30 mis en œuvre pour le contrôle du mode à diamètre d'ordre pair.

A contrario, un mode à diamètre d'ordre impair étant associé à des tensions en opposition de phase et générant donc une intensité non-nulle dans le circuit 32 additionnel de résonance, ledit circuit 32 peut être utilisé pour générer une nouvelle résonance électrique à la fréquence du mode d'ordre impair.

Le fonctionnement de la coque 10 selon l'invention, et plus particulièrement du système 20 d'amortissement des vibrations va à présent être décrit, en référence à la figure 4 qui représente les schémas électriques équivalents pour un mode à diamètre d'ordre pair (schéma A) et pour un mode à diamètre d'ordre impair (schéma B).

Une coque 10 cylindrique selon l'invention est fournie. Elle comprend un système 20 d'amortissement des vibrations tel que décrit ci-dessus.

Lorsque la coque 10 est soumise à des vibrations, elle tend à se déformer radialement selon des modes à diamètres.

Les transducteurs piézoélectriques 22 sont alors soumis à des contraintes mécaniques et génèrent une tension électrique Vp par effet piézoélectrique. Ainsi, les résonateurs électriques 30 génèrent chacun une tension électrique, l'énergie mécanique étant convertie en énergie électrique qui est ensuite dissipée sous forme de chaleur dans les résistances 26.

Lorsque la coque 10 se déforme selon un mode à diamètre pair (schéma A de la figure 4), notamment un mode à diamètre égal à 2 les deux transducteurs piézoélectriques 22 d'une paire donnée génèrent des tensions Vp identiques du fait de la symétrie des déformées modales. Les résonateurs électriques 30 permettent un amortissement du mode à diamètre d'ordre pair, réduisant les déformations associées. Aucun courant ne circule dans le circuit 32 additionnel de résonance.

Lorsque la coque 10 se déforme selon un mode à diamètre impair (schéma B de la figure 4), notamment un mode à diamètre égal à 3, les deux transducteurs piézoélectriques 22 d'une paire donnée génère des tensions Vp opposées. Un courant d'intensité i non nulle est alors généré dans le circuit 32 additionnel de résonance qui joue alors le rôle de résonateur électrique et permet un amortissement du mode à diamètre d'ordre impair, réduisant les déformations associées.

Cela permet ainsi de réduire l'amplitude vibratoire de deux paires de modes à diamètres d'ordres pair et impair.

Le système 20 d'amortissement des vibrations permet ainsi un amortissement de deux paires de modes en simultané qui soit simple à mettre en place. Cette mise en place passive évite l'ajout de capacités additionnelles qui seraient susceptibles de dégrader les performances d'amortissement.

Le système 20 limite également les contraintes liées au positionnement des transducteurs piézoélectriques 22, les transducteurs piézoélectriques 22 pouvant être distribués sur la paroi 12 sans prendre en compte la géométrie des modes cibles.

De plus, dans le cas de défaillance d'une paire de transducteurs piézoélectriques 22 ou du circuit indépendant associé, les performances du système 20 sont peu dégradées du fait de la redondance des autres transducteurs 22 et circuits.

Selon une variante, la polarité des branchements des transducteurs piézoélectriques de chaque paire est telle que les transducteurs piézoélectriques génèrent dans leur circuit dissipatif respectif une tension de signe opposé lorsqu'ils sont déformés dans le même sens. La fréquence d'amortissement de chaque résonateur électrique 30 est alors de préférence réglée de manière à être égale à une fréquence de résonnance d'ordre impair de la coque et la fréquence d'amortissement du circuit 32 additionnel de résonance est de préférence réglée de manière à être égale à une fréquence de résonnance d'ordre pair de la coque.

## Revendications

1. Coque (10) cylindrique comportant une paroi (12) cylindrique s'étendant autour d'un axe central (A-A') et délimitant un espace interne (14), la coque (10) étant susceptible de se déformer radialement sous l'effet de vibrations,
la coque (10) comprenant un système (20) d'amortissement de vibrations comportant au moins une paire de transducteurs piézoélectriques (22) branchés en parallèle et disposés sur la paroi (12) de la coque (10) de façon symétrique par rapport à l'axe central (A-A'), chaque transducteur piézoélectrique (22) étant connecté à un circuit dissipatif (24) respectif comportant au moins une résistance (26) et une inductance (28),
**caractérisée en ce que** le système (20) d'amortissement comprend en outre, pour chaque paire de transducteurs piézoélectriques (22), un circuit (32) additionnel de résonance branché en parallèle avec ladite paire de transducteurs piézoélectriques (22) et comprenant au moins une résistance (36) et une inductance (38).

2. Coque (10) selon la revendication 1, dans laquelle les transducteurs piézoélectriques (22) sont répartis angulairement de manière homogène sur la paroi (12) cylindrique de la coque (10).

3. Coque (10) selon l'une quelconque des revendications précédentes, dans laquelle le système (20) d'amortissement comprend au moins six paires de transducteurs piézoélectriques (22), de préférence au moins huit paires de transducteurs piézoélectriques (22).

4. Coque (10) selon l'une quelconque des revendications précédentes, dans laquelle la polarité des branchements des transducteurs piézoélectriques (22) de chaque paire est telle que les transducteurs piézoélectriques (22) génèrent dans leur circuit dissipatif (24) respectif une tension de même signe lorsqu'ils sont déformés dans le même sens.

5. Coque (10) selon l'une quelconque des revendications précédentes, dans laquelle la paroi (12) cylindrique comprend une surface interne (16) orientée vers l'axe central (A-A') et une surface externe (18) opposée, le système (20) d'amortissement étant agencé sur la surface interne (16) ou sur la surface externe (18) de la paroi (12) cylindrique.

6. Coque (10) selon l'une quelconque des revendications précédentes, dans laquelle chaque transducteur piézoélectrique (22) forme avec le circuit dissipatif (24) auquel il est connecté un circuit RLC résonant présentant une fréquence d'amortissement, ladite fréquence d'amortissement étant réglée de manière à être égale à une fréquence de résonnance de la coque (10).

7. Coque (10) selon la revendication 6, dans laquelle la fréquence d'amortissement est réglée de manière à être égale à une fréquence de résonnance d'ordre pair de la coque (10).

8. Coque (10) selon la revendication 7, dans laquelle le circuit (32) additionnel de résonance présente une fréquence d'amortissement réglée de manière à être égale à une fréquence de résonnance d'ordre impair de la coque (10).

9. Coque (10) selon l'une quelconque des revendications précédentes, dans laquelle le circuit (32) additionnel de résonance ne comprend pas de capacité additionnelle.

10. Coque (10) selon l'une quelconque des revendications précédentes, dans laquelle la paroi (12) cylindrique est réalisée en métal ou en matériaux composites, de préférence en un composite à base de verre et de résine.
